Europäisches Patentamt

European Patent Office

Office européen des brevets

(19)

(11) Publication number:

**0 227 613**
**A2**

(12) **EUROPEAN PATENT APPLICATION**

(21) Application number: **86830375.1**

(22) Date of filing: **16.12.86**

(51) Int. Cl.4: **F 03 G 3/00**
**F 01 B 9/06**

(30) Priority: **17.12.85 IT 954885**

(43) Date of publication of application:
**01.07.87 Bulletin 87/27**

(84) Designated Contracting States:
**AT BE CH DE ES FR GB LI SE**

(71) Applicant: **Calzolari, Rino**
**Via di Cammori 52**
**I-50145 Firenze (IT)**

(72) Inventor: **Calzolari, Rino**
**Via di Cammori 52**
**I-50145 Firenze (IT)**

(74) Representative: **Mannucci, Gianfranco, Dott.-Ing.**
**Ufficio Tecnico Ing. A. Mannucci Via della Scala 4**
**I-50123 Firenze (IT)**

(54) **Propulsor assembly with centrifugal mass providing a thrust reaction.**

(57) A cylinder-piston system (5,7) gives rise to a thrust and a reaction according to an advancement direction (f1), and at least a unit with platform (24) rotating according to an axis (22) transverse to the advancement direction, causes the movement in radial direction of a centrifugal mass which cyclically brings itself in correspondence of the thrust direction and on which the reaction of the piston (7) is discharged; the unit is accelerated in its rotation prior to the phase of discharge of the reaction on the mass, and is decelerated after such a phase. The centrifugal mass can also directly act on the mobile part on which it is installed.

Fig.2

EP 0 227 613 A2

## Description

"PROPULSOR ASSEMBLY WITH CENTRIFUGAL MASS PROVIDING A THRUST REACTION"

The object of the invention is to provide a propulsor assembly apt to generate high thrusts. It comprises in combination: a mobile housing to which at least a unit with platform is combined, rotating relative to the housing about an axis orthogonal to the assembly advancement direction, the rotation of said unit causing the movement in radial direction of a centrifugal mass or "ram" which cyclically brings itself in correspondence of the direction of said advancement, said unit with platform being driven into rotation by a motor and said unit being accelerated and decelerated in its rotation; and means to obtain a thrust on said mobile housing, owing to the reaction provided by said centrifugal mass.

According to a first embodiment of the invention the propulsor assembly comprises a housing with which at least a member apt to deliver energy and having the form of a cylinder-piston system is combined, such system being able to give rise to a thrust and reaction action according to an advancement direction, and at least a unit with platform, rotating relative to the housing about an axis transverse to said direction of advancement of said member and of said thrust, and the rotation of which unit causes the movement in radial direction of a centrifugal mass or "ram" which cyclically brings itself in correspondence of the direction of said thrust and on which the piston reaction is discharged, thereby the corresponding thrust is unidirectionally transmitted by said member to the housing; said unit with platform is made to rotate by its own independent motor, a return cam being provided solid with the housing to recall said mass whenever this is at a position far from said member. According to the invention, the unit is accelerated in its rotation prior to the discharge phase of the reaction onto the mass and is decelerated after such a phase, in order to limit the reverse displacement of the housing.

The assembly may comprise a dual clutch between said rotating unit and its motor, to impose the two speeds, and a brake to reduce said speed after the reaction on said mass. The assembly may also comprise a means for operating the unit for the acceleration, which is engaged and disengaged in synchronism with the unit to make it run at the highest velocity, respectively to consent its deceleration; after the deceleration, the unit is driven into rotation at a slowed down speed and it is provided with a free-wheel (or similar) system, to allow its acceleration; a brake is provided for the deceleration after the reaction on said mass.

The present assembly may include a rotor provided with several pairs of units having a star arrangement, and one, two or more members apt to create energy; to said rotor, actuation means are associated for operating said pairs of units for the acceleration, synchronously movable with the rotor advancements, in order to take up an active condition and a passive condition. The two unit-operating means act each time on a pair of units for the acceleration of the eccentric masses and then move away therefrom to consent - through an angular displacement of the rotor - the replacement of a pair of units with the next one; said operating means move along the rotor axis in a reciprocating way. Eccentric means are provided to operate the compression in the cylinder/piston systems which are the members apt to create energy, being operated in synchronism with the rotor in order to act each time a unit moves away from its active position on said members.

According to another embodiment, the propulsor assembly comprises retention means for retaining said centrifugal mass during an acceleration phase of said platform, which retention means are driven for releasing said centrifugal mass in correspondence of a predetermined angular orientation - relative to the advancement direction - and in correspondence of a predetermined angular velocity of rotation reached by the platform and detected by suitable tachymetric devices, the release of said mass causing the impact thereof against a part of said housing and yielding up a corresponding share of energy thereto and thus causing the advancement thereof, a return cam being fixedly predisposed relative to the housing to bring said centrifugal mass back towards the centre of said unit, while the platform is decelerated.

Said retention means may comprise in combination a pair of stems each driven by a pinion and rack system, said pinion being operated by a cyilnder-piston device whose intervention is controlled by said tachymetric devices.

The motor may be either an electric self-braking motor or an internal combustion engine, in the latter case braking means being provided to decelerate said platform.

Advantageously, a plurality of unit with platform and centrifugal mass may be provided around a common rotating support so as to be successively presented in front of the part of said housing intended to receive the impact of the centrifugal masses of each unit. In this case, a main motor operates, through independent transmissions, the movement of said common rotating support as well as the rotation of the individual platforms of each unit, friction wheels with mobile axes allowing the engagement of the platform with the transmission for the acceleration phases and the disengagement of the platform for the deceleration phases, respectively.

Practically, said friction wheels having mobile axes are carried by oscillating arms, a homokinetic joint permitting the oscillation of the transmission.

The invention will be better understood by following the description and the attached drawing, which shows two practical non limitative exemplifications of the same invention. In the drawing:

Fig. 1 shows a side view of a propulsor assembly according to the invention in a simplified embodiment;

Fig. 2 shows a view of the assembly according to a direction orthogonal to that of Fig. 1;

Figs. 3, 4 and 5 show two side views and an axial view of a multiple assembly realized according to the invention;

Fig. 6 is a longitudinal section of an unit of the assembly according to a second embodiment;

Fig. 7 is a plan view of said unit;

Fig. 8 is a section on line VIII-VIII of Fig. 6

Fig. 9 is a section on line IX-IX of Fig. 7;

Fig. 10 is an ensemble view of an assembly according to this second embodiment, with four units on a rotating support;

Fig. 11 is a side view and partial section on line XI-XI of Fig. 12; and

Fig. 12 is a top view of one of the units of Fig. 10.

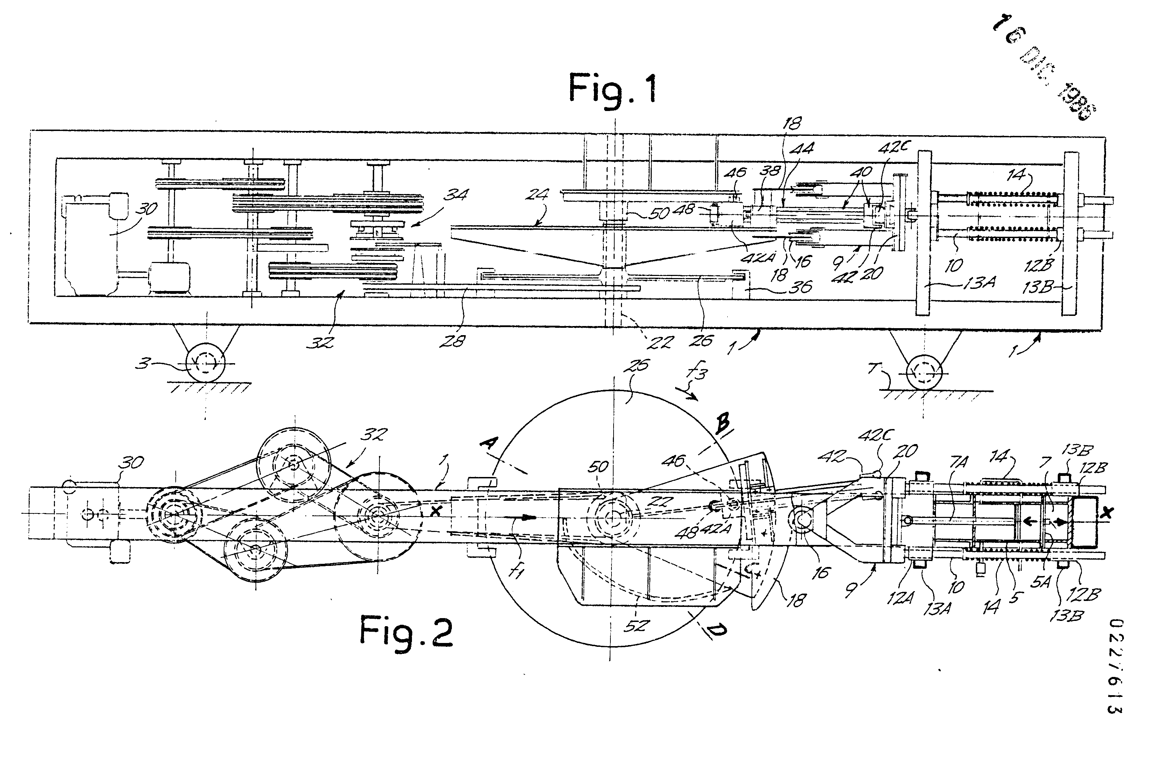

According to what is illustrated in the attached drawing, by firstly referring to Figs. 1 and 2, numeral 1 generically indicates a housing making part of a carriage-like frame provided with bearing wheels 3 for the reaction on the ground. Such a disposition allows that the assembly carried by the housing 1 can be considered an open assembly.

An internal combustion cylinder-piston system (like that of a two stroke engine) is provided as the member for the delivery of energy, of which system numeral 5 indicates the cylinder, provided with a head 5A, and numeral 7 indicates the piston. The piston has a stem 7A which moves along with the piston according to the thrust and advancement direction; in particular, the stem 7A is articulated to a carriage 9, which is guided by stems 10 thereof sliding within sleeves 12A,12B. The sleeves 12A and 12B are fixed to transverse beams 13A and 13B which, in turn, are secured to the housing 1 with which the cylinder 5 is solid. Against the outermost sleeves 12B, springs 14 are made to react in order to move the piston 7 away from the head 5A, to determine the intake strokes and to produce the bearing pressure of tappets 16 having the form of wheels carried by the carriage 9; the tappets 16 coact with a cam 18 which rotates and acts on the carriage and thus the piston to determine the compression stroke of the piston towards the head 5A of the cylinder, in the manner described below. The carriage 9 of the piston in particular exhibits a surface 20 substantially transverse to the axis of the thrust and to the direction of motion of the piston 7, on which surface, a centrifugal mass or so-called "ram" reacts as indicated below.

On the housing 1 a rotating unit which comprises a platform 24 and a braking disc 26, also rotates about an axis defined by a shaft 22 orthogonal to the direction of advancement and stroke of the piston. The unit 24, 26 is driven, through a transmission 28, by an independent motor 30 which, via a reduction unit and gear box generally indicated by 32, may determine two different rotation speeds of the unit, through a double-clutch 34 which causes different velocity ratio between the motor and the unit 24, 26. Braking jaws 36 - whose functions are indicated below - cooperate with the braking disc 26. The unit 24, 26 carries, on the platform 24, guide means 38 which consent the sliding, according to a radial direction - in respect to the rotation axis of the assembly 24, 26 - of a centrifugal mass generally indicated by 40 and which comprises a heavy mass 42 constituting the so-called "ram" and a pair of guide stems 44 which slide on the guide means 38. A second mass or block 42A, more internally located than that indicated by 42, makes part of the inertial centrifugal mass 40. Also making part of the rotating unit 24, 26 there are the two cam profiles 18, indicated above, which act upon the tappet wheels 16 for driving the carriage 9 of the piston. The internal block 42A of the mass 42, 44 is provided with a side tappet 46 and an inner tappet 48. A cam-profile 50 -solid with the housing 1 - cooperates with the inner tappet 48 and tends to urge the centrifugal mass outwardly along a stretch extending from the axis of the advancement direction, indicated by the arrow f1, through an angle of about 90° in the direction of the angular displacement of the unit 24, 26, which rotates according to arrow f3. A cam 52 - being also solid with the housing 1 - cooperates with the side tappet 46 and tends to move the centrifugal mass made up of the members 42, 42A, 44 inwardly, that is, towards the axis defined by the shaft 22; this re-enter action is determined approximately along an arc opposite to the one representing the action zone of cam 50.

The disposition of the above mentioned dual-speed transmission drive starting from the motor 30 and concerning the cams 50 and 52 that cooperate with the tappets 48 and 46 is such as to determine, in particular, the following actions. X-X representing the thrust direction of the energy generator cylinder-piston system, and thus the direction of movement of the housing 1 and of sliding of the carriage 9, the action of the cam 50 develops approximately from the axis X along an arc of about 90° in the direction of the arrow f3. In the zone of arc AB on which the guide means 38 run, the coupling of the transmission high speed takes place with the rotating unit, so that a great acceleration is obtained of the same unit and thus also of the centrifugal mass which then reaches at high speed the angular position indicated by B. Along the arc BC, the utilization of the centrifugal force accumulated by the mass 42, 42A, 44 takes place through a contact between the mass 42 and the transverse track 20 of the carriage 9, through wheels 42C or equivalent means providing a contact between the mass 42 and the track surface 20. Prior to the action of the mass on the surface 20 of the carriage, this has been moved in the direction of arrow f1 by the cams 18 which act on the wheel-like tappets 16, to determine the compression stroke of the piston 7 in respect to the cylinder 5, 5A; accordingly, the intervention of the mass upon the surface 20 of the carriage and thus the centrifugal push, again in the direction of arrow f1, upon the equipment of the carriage 9, 10 carrying the piston 7, take place in correspondence of the ignition and expansion of the gases inside the combustion chamber formed by the cylinder-piston system 5, 5A, 7. As the intervention of the centrifugal forces due to the centrifugal masses 42, 42A, 44 prevents a displacement of the piston in a direction opposite to arrow f1, as an immediate consequence of this, there is a thrust of the high pressure gases on the head 5A of the cylinder 5 and thus a thrust for the advancement in the direction of arrow f1, which occurs onto the structure 1 making part of the carriage-like frame provided with wheels 3. When the centrifugal mass has passed the active arc BC, a braking action is caused by the disc 26 along the arc CD to lower the speed of the unit 24, 26 rotating around the axis of the shaft 20 and thus to lower the rotation speed of the centrifugal mass. Along the arc corresponding to the cam 52 - along with the low rotational speed due to said braking action and to the variation of the transmission ratio through the system 32 - an approaching movement of the centrifugal mass towards the axis of shaft 22 takes place because of the action of cam 52 on the tappet 46, which occurs during a phase of low rotation speed and, therefore, through a minimum effort. In the approach conditions, starting from the angular position D to the axis X-X, the centrifugal mass moves close to the rotation axis to be then pushed outwardly by the cam 50 acting on tappet 48 and accelerated owing to the engagement of the high speed, with the device 32. After the action of the centrifugal mass onto the surface 20 of the carriage 9, this is pushed again towards the rotation axis defined by the shaft 22, owing to the effect of springs 14 which tend to move the piston 7 away from the head 5A of the cylinder thus performing the exhaust and intake phases of the cylinder-piston system 5, 7.

The intervention of the centrifugal mass causes a reaction on the same mass, which opposes the withdrawal of piston 7 from the head 5A of the cylinder and determines thereby the advancement of the carriage solid with the housing 1, while the mass slides relative to its own slide guides 38.

By the above described system, upon every revolution of the centrifugal mass, that is, of the unit 24, 26, because of the internal combustion cylinder-piston system (a two-stroke engine in the example of the drawing), an action is obtained onto the head 5A in the advancement direction indicated by the arrow f1, with a reaction on said mass. The centrifugal mass is partially moved near the rotation axis of the unit 24, 26 by the same advancement stroke of the carriage which makes it move back relative to the same carriage and said centrifugal mass is then moved closer to the rotation axis of the unit 24, 26 by means of the cam 52 in a condition of reduced rotation speed and thus of limited effort as far as this advancement passive phase is concerned.

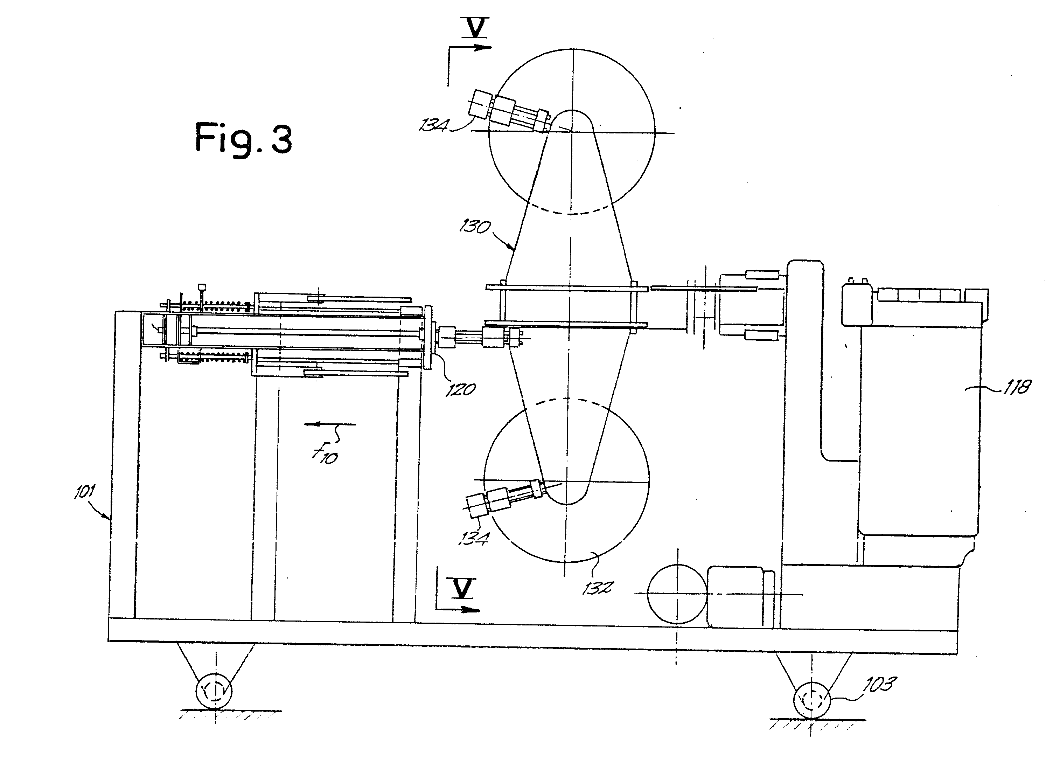

In Figs. 3 to 5 a solution is shown wherein there is a multiplication of the effects of the described system on every revolution performed by an equipment carrying a plurality of centrifugal masses on respective rotation axes.

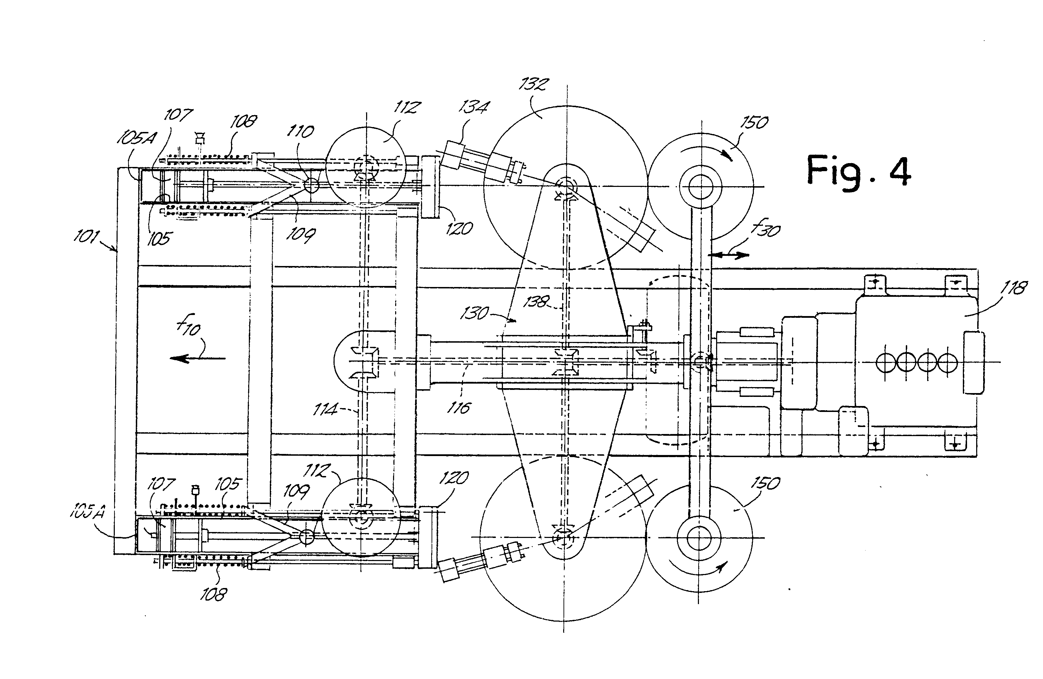

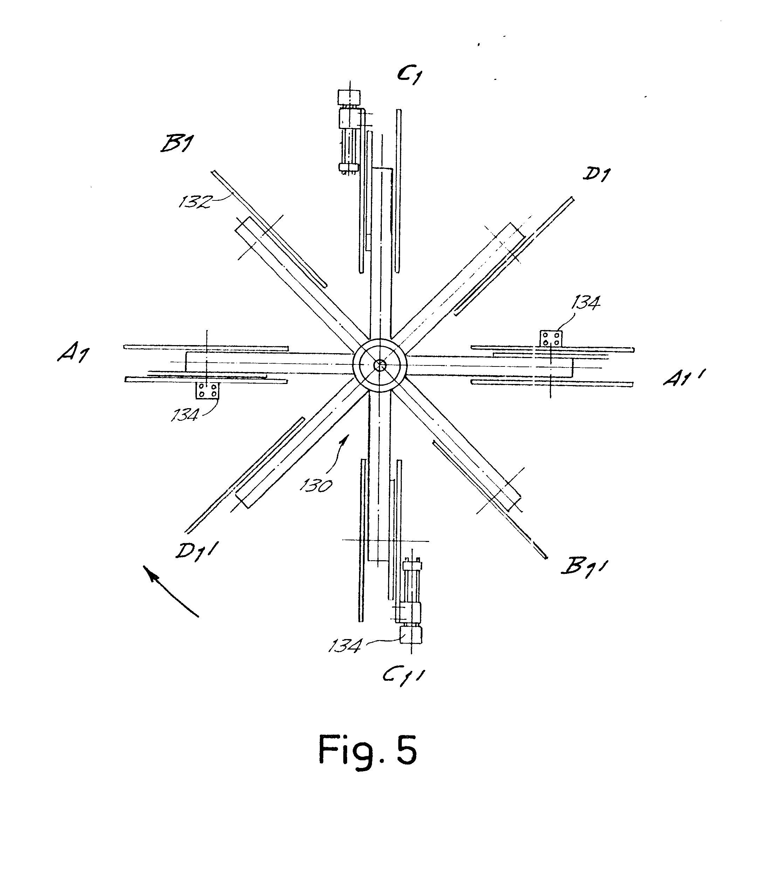

According to this embodiment, on the housing 101, movable through wheels 103, a pair of cylinder-piston systems having cylinders 105, heads 105A and pistons 107, is provided. The carriages 109, with which the pistons 107 are connected - through a disposition similar to that of the previous example - act, urged by compression springs 108 through tappets 110, upon respective cams 112 which determine the compression stroke of the respective pistons with a suitable timing: the cams 112 are operated into rotation by a transmission 114 which takes the motion from an axial shaft 116 actuated by a self-contained motor 118: the axis of shaft 116 is the advancement axis, the advancement direction being indicated by the arrow f10. The carriages 109 of the pistons 107 are solid with substantially transverse reaction surfaces 120 on which the centrifugal masses of an assembly of rotating units act in succession - each unit having a centrifugal mass - which masses follow one another in correspondence of the surfaces 120 to determine a fast succession of the functions of the two cylinder-piston systems 105, 107. To this end, around the shaft 116, an equipment 130 is provided driven into rotation by the motor 118 and formed by a star with eight arms (in the drawing) on each of which a rotating unit is disposed with a respective centrifugal mass. Two units, rotating on two opposite arms of the star-like equipment 130, simultaneously act on the two cylinder-piston systems 105, 107, that is, on the respective surfaces 120, the pairs of units with centrifugal masses replacing each other upon every one eighth of a revolution performed by the equipment 130. Numeral 132 indicates the rotating units which are carried by the ends of the eight arms and which, in turn, carry the centrifugal masses 134 having the already described functions of the masses 42, 42A, 44 for the simplified assembly of Figs. 1 and 2. Each unit 132 has a rotating disc or platform which is operated with a slow rotation motion by a transmission 138 taking the motion from the shaft 116; this transmission is also provided with a free-wheel clutch system, allowing an acceleration of the equipment 132 of which the rotating platforms make part, so that each of them may be accelerated in respect to the speed of rotation imposed by its own transmission 138. Each rotating unit 132 can also be subjected to the action of a brake of its own, which decelerates the rotating unit until it is brought back to the slow rotation speed obtained by the transmission 138. The acceleration of each rotating unit 132 and thus of the centrifugal masses 134 associated thereto, may be achieved through a fast transmission system made up of two discs being put into rotation at high speed by a suitable transmission drawn from the shaft 116 and thus from the motor 118, the two fast discs 150 being carried by an equipment axially movable in the direction of the double arrow f30, to move near to and away from the two units 132. By the intermittent or continuous rotation of the star equipment 130, besides having the centrifugal masses 134 presenting themeselves in a cyclic way in correspondence of the surfaces 120, a cyclic engagement of each rotating unit 132 is also achieved in correspondence of a fast disc 150, which draws near it in order to cause an acceleration of said rotating unit. Accordingly, on each 360° revolution of the star equipment 130, two useful actions of each one of the centrifugal masses 134 of the respective unit 132 onto the two carriages 109 of the cylinder-piston systems 105, 107 are obtained, that is, two decelerations and two accelerations. In particular, considering Fig. 5 which is a view from line V-V of Fig. 4, at positions A1, A1′, the utilizations of the respective centrifugal masses 134 - which act on the surfaces 120 of the carriages 109 - are obtained; along the paths A1,B1,C1 and A1,′B1′,C1′ a deceleration of the rotating platforms 132 takes place; on the contrary along the paths C1,D1,A1′ and C1′,D1′,A1 an acceleration occurs of the rotating units owing to the intervention of the fast discs 150 which move near to the units 132 thus causing an acceleration thereof. Each unit 132 comprising a platform will be provided of fixed cams, like the cams 50 and 52 already described in the preceding example for the inwards approach movement and for the outwards displacement of the masses 134 respectively in correspondence of the deceleration and acceleration zones.

As can be seen from the above, the solution of Figs. 3 to 5 allows a multiplication of the effects that can be obtained by the solution providing a single member 5, 7 apt to deliver energy, only one rotating platform and a single centrifugal mass 40, 42, 44, shown in Figs. 1 and 2. The two members capable of delivering energy, that is, the two cylinder-piston systems 105, 107 give rise, upon each contemporaneous ignition and expansion phase thereof - to a thrust caused by the high pressure gases onto the heads 105A of the cylinders 105, and thus to an advancement thrust, in the direction of arrow f10, which is transmitted to the structure 101 forming a carriage with wheels 103. In fact, because of the described disposition of the star 130 and of the rotating units 132 carrying the centrifugal masses 134, and because of their acceleration and deceleration phases, the centrifugal masses 134 are made to operate on the surfaces 120 of each carriage 109, in the condition in which they find themselves at positions A1 and A1′ of the star equipment 130 in Fig. 5, that is, in a situation of maximum acceleration. Such maximum acceleration is obviously due to the properly timed accelerating action arising from the approach and contact of discs 150 with platforms 132. To the advancement of the structure 101, a corresponding backward displacement the carriages 109 in the direction opposite to arrow f10 takes place. with a first re-approaching movement of said masses to the rotation axis of the respective unit 132, the complete re-approaching of said masses being then determined by the above described deceleration phase and by the suitable return cam. After the masses 134 have withdrawn from the surfaces 120, the carriages 109, urged by the compression springs 108, move as far as the contact of the wheels 110 with the cam 112 is restored. In this way, each system 105, 107 is able to complete the phases of expansion, exhaust and intake followed by the compression phase due to the action of cams 112. Upon every one eight of a revolution (in the example of the drawing) performed by the star 130. a double thrust action on the heads 105A, more or less equal for each system 105, 107 can be obtained, and it is therefore evident that, by a suitable rotation speed of the star equipment 130, said double thrusting actions may follow each other at very short intervals until they give rise. in regards to the advancement movement of the structure 1. to an effect nearly similar to that obtainable through a continuous thrust.

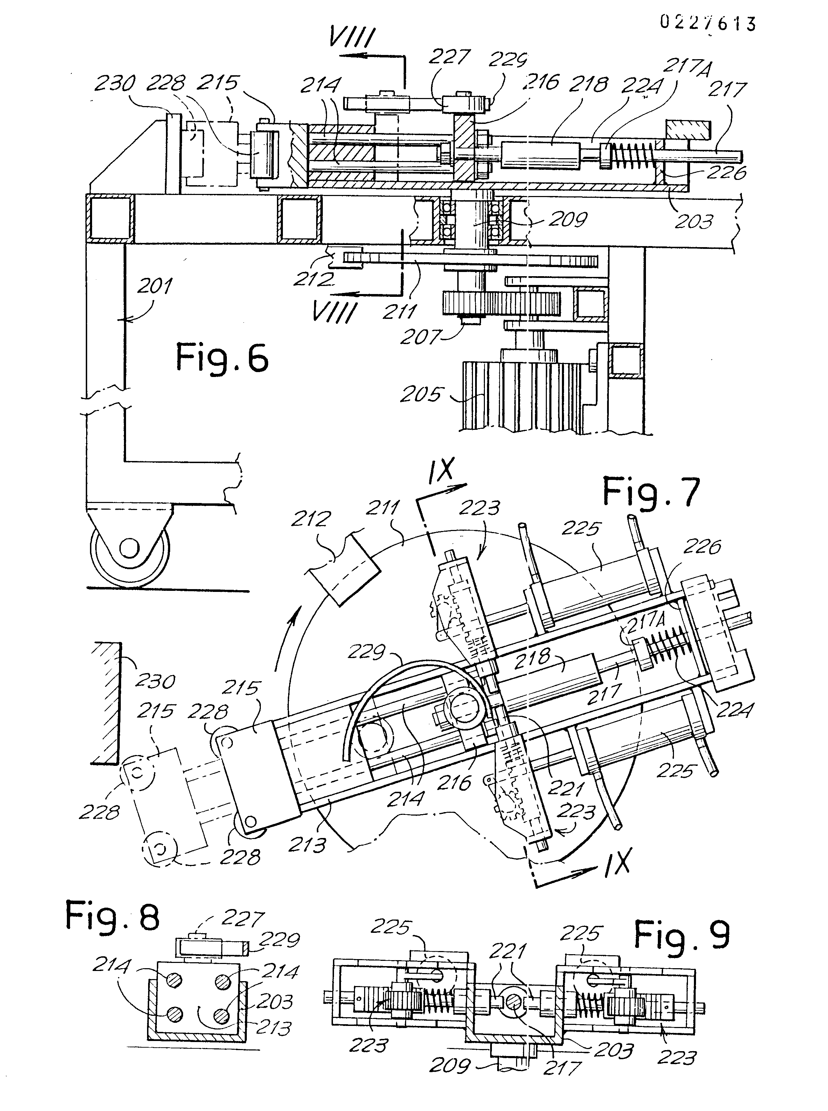

According to what is illustrated in Figs. 6 to 9, numeral 201 indicates a carriage housing on which the assembly according to the invention is applied. An individual platform unit comprises a platform 203 driven into rotation by a motor 205 through a transmission 207 and a shaft 209; on said shaft 209, a disc 211 is fitted that is keyed for the actuation of possible brake jaws 212 capable of decelerating the platform 203.

On the platform 203, a guide 213 is applied within which four stems 214 slide being associated with a centrifugal mass 215 (ram) which is thus able to slide between two end positions of maximum approach to the rotation axis of the platform and of maximum distance therefrom, these positions being shown respectively by a solid line and a dotted line in Figs. 6 and 7. When the mass slides between the two positions, the stems 214 drag along a black 216 to which another stem 217 is connected on which a cylinder 218 is located for the purposes described below. Stems 221 of pinion-rack retention means 223 retain the mass 215 at a position close to the rotation axis by acting on the shoulder defined by said cylinder 218, said retention means 223 being operated by cylinder-piston systems 225. When the stems 221 are driven by the cylinder-piston systems 225 in order to be released, they move back instantaneously thus releasing the stem 217, then tend to draw near again. The engagement with the shoulder provided by the cylinder 218 is possible, however, only when the centrifugal mass 215 has come back to the original position prior to the release, owing to the action of the return means to be described later. A compression spring 224, acting between a portion 226 of the platform 203 and a shoulder 217A of the stem 217, operates an initial thrust to the centrifugal mass 215 after the release by the stems 221.

The centrifugal mass 215 is also associated: with a roller 227 which acts as a tappet on a cam 229 solid with said housing 201 to return the centrifugal mass 215 as described below; and with two further rollers 228 apt to roll on a portion of the housing 201 as described below.

The centrifugal mass 215 is initially retained, in order to be engaged through the means 223 with the platform 203, in the vicinity of the rotation axis thereof, and is driven into rotation and accelerated by the motor 205. When the platform 203 has reached a predetermined angular velocity - detected by tachymetric devices (not shown) - a suitable control circuit acts on the cylinder-piston systems 225 which release the retention means 223 thereby releasing the centrifugal mass 215. This mass, by receiving an initial thrust from the spring 224, is further accelerated by the centrifugal force to which it is subjected and strikes against a portion 230 of the housing 201, the release of the mass 215 taking place when the platform 203 finds itself at a predetermined position in respect to the housing 201 and in such a way as to cause the impact of the mass 215 onto the portion 230 of said housing 201. The rollers 228 allow the centrifugal mass 215 to be rolled onto the portion 230 of the housing 201 after the impact.

Upon the impact, the centrifugal mass 215 gives up a share of its own energy to the housing 201 thereby urging it to move in the direction of the same impact. At this point, the platform 203 is slowed down by the action of the motor 205 -if a self-braking motor is used - and/or by the action of braking jaws 212 acting upon the disc 211. As the platform 203 and the mass 215 keep on rotating, the roller 227 is made to engage on the cam 229 which is solid with the housing, and the mass 215 is then brought back towards the rotation axis of the platform 203. Owing to the reduction of the rotation velocity of the platform 203, the centrifugal force to which the mass 215 is subjected, results considerably reduced in the approaching phase of said mass to the rotation axis and, as a consequence, the reaction transferred by the roller 227 to the cam 229 is greatly limited. At this point, the platform acceleration starts again.

A plurality of assemblies 235, like the one shown in Figs. 6 and 7, may be mounted in a variable number on a common support with a single motor, as shown by the schematic ensemble view on Fig. 6. In this case, on a support 240 applied to the housing 201A, four arms 241 each carrying an assembly 235 similar to that of Figs. 6 and 7, are fitted; the assemblies 235 are operated by a single motor 243 by a transmission system to be described below.

The motor 243 operates also the rotation of the support 240 about its own axis, so that the assemblies 235 are cyclically brought in front of a portion 245 of the housing 201A, the centrifugal masses 215 of each assembly 235 being made to impact onto said portion 245.

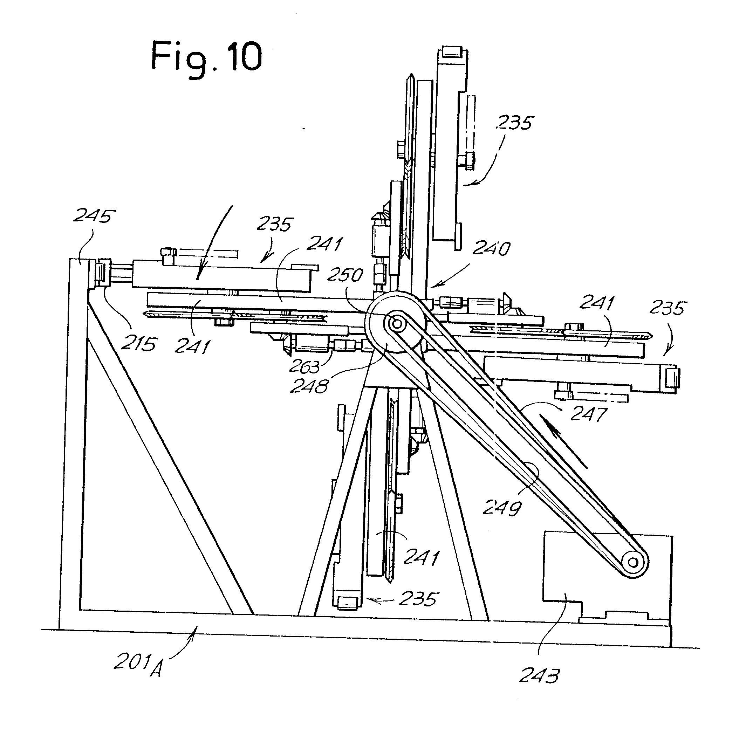

As shown in particular in Figs. 10 to 12, the motor 243 operates the rotation of the support 240 through a belt 247 and a pulley 248, and the rotation of a shaft 251, housed in said support 240, through a belt 249 and a pulley 250.

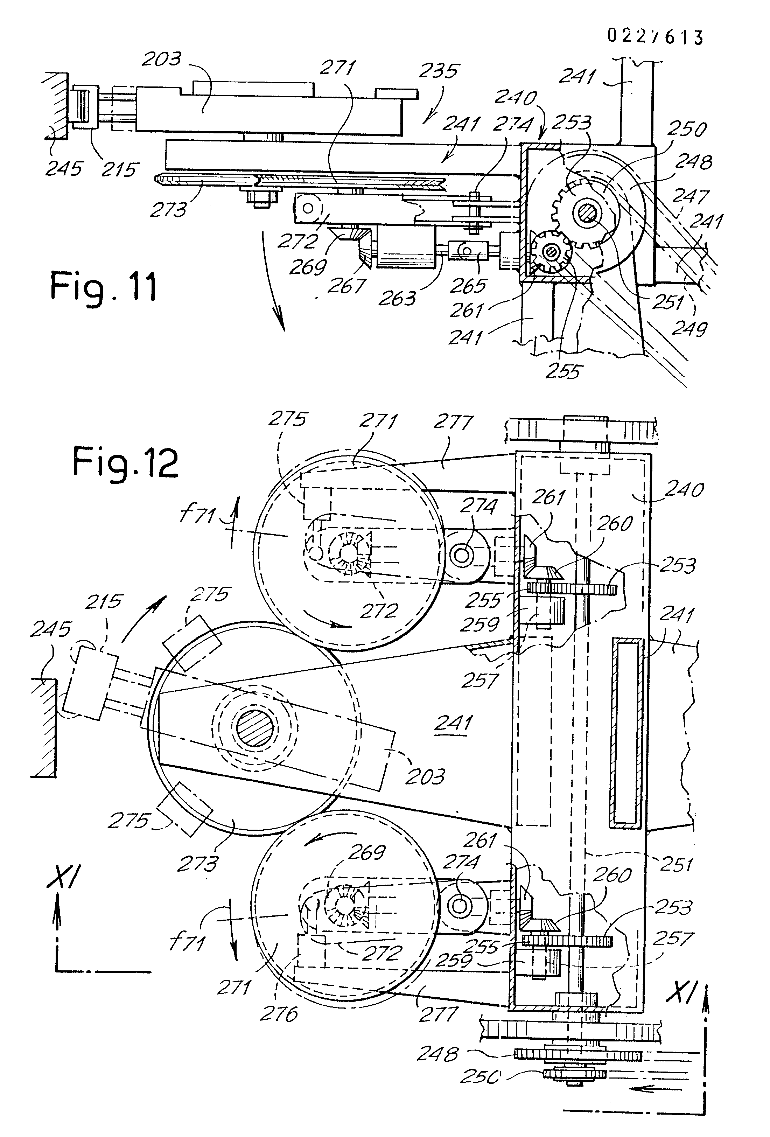

On the shaft 251, gears 253 are mounted from which the motion is taken via other gears 255 mounted on small shafts 257 idly rotating on bearings 259. Two pairs of gears 253, 255 are associated with each assembly 235 as shown in particular in Fig. 12. On each small shaft 257, a bevel gear 260 is mounted which transmits the motion, through the bevel gear 261 meshing therewith, to a shaft 263 made up of two sections with the interposition of a homokinetic joint 265 (Fig. 11). At the opposite end of the shaft 263, a pair of bevel gears 267, 269 transmits the motion to a friction wheel 271 mounted on an arm 272 oscillating about an articulation 274. Two friction wheels 271 for each assembly 235 accelerate, through another friction wheel 273, the platform 203 of a unit equivalent to that of Figs. 6 and 7, said wheel 273 being fitted, that is keyed, on the rotation shaft of the platform 203.

When the platform 203 has reached the desired rotation velocity and is brought by the support 240 into a predetermined position relative to the portion 245 of the housing, the centrifugal mass 215 is released so as to move and strike against said portion 245. After the impact, the platform is slowed down by braking jaws 275 which act on the same wheel 273 or on a suitable disc mounted on the platform axis. During the braking action, the friction wheels 271 are moved away from the wheel 273 by causing the arms 272 to oscillate about the articulations 274 - according to arrow f71 - by means of cylinder-piston systems 276 carried by appendixes 277 being solid with the support 240. When the approach phase of the centrifugal mass 215 operated by the cam profile 229 is ended, the friction wheels 271 are brought again into contact with the wheel 273 to speed up the platform again and predispose the latter to receive another impact on its portion 245 by the centrifugal mass 215. These phases are obtained during the displacement of the rotating assembly 240, 241 until the concerned assembly 235 is brought back to the position in front of the portion 245.

## Claims

1. A propulsor assembly able to provide high thrusts, characterized in that it comprises in combination: a mobile housing to which at least a unit with a platform rotating relative to the housing about an axis orthogonal to the advancement direction of the assembly is combined, the rotation of the unit causing the movement in radial direction of a centrifugal mass or "ram" which cyclically brings itself in correspondence of said advancement direction, said unit with platform being driven into rotation by a motor and said unit being accelerated and decelerated in its rotation; and means for obtaining a thrust on said mobile housing owing to the reaction provided by said centrifugal mass.

2. An assembly according to claim 1 characterized in that to the housing a member is combined apt to deliver energy and having the form of a cylinder-piston capable of operating a thrust action and a reaction according to a direction of advancement, and at least an unit with platform, rotating relative to the housing, around an axis transverse to said direction of advancement of said member and of said thrust and the rotation of which unit causes the movement in radial direction of a centrifugal mass or "ram" which cyclically brings itself in correspondence of the direction of said thrust and on which the reaction of the piston is made to discharge thereby the corresponding unidirectional thrust is transmitted to the housing by said member, said unit with platform being caused to rotate by an independent motor of its own, and a return cam for said centrifugal mass being provided solid with the housing for calling back said mass whenever it is at a position far from said member, characterized in that the unit is accelerated in its rotation prior to the phase of the reaction discharge on the mass, and is decelerated after such a phase, in order to limit the reverse displacement of the housing.

3. Assembly according to the preceding claims 1 and 2, characterized in that it comprises a double clutch between said rotating unit and the motor thereof, to impose the two speeds, and a brake to reduce said speed after the reaction on said mass.

4. Assembly according to claim 1 to 3, characterized in that it comprises an operating means to act on the unit for the acceleration thereof, which synchronously engages and disengages the unit to impose the highest speed thereto, respectively to consent the deceleration thereof and, after the deceleration, the unit being driven into rotation at a reduced speed and being provided with a free-wheel (or similar) system, in order to make possible the deceleration thereof, as well as with a brake for the deceleration after the reaction on said mass.

5. Assembly according to claims 1 to 4, characterized in that it comprises a rotor provided with several pairs of units with a star-like disposition, and one, two or more members apt to create energy; operating means for obtaining the acceleration of the units being associated with said rotor, and being synchronously movable with the rotor advancements in order to take up an active and an inactive condition.

6. Assembly according to claim 5, characterized in that the two operating means for the units act each time onto a pair of units for the acceleration of the eccentric masses and move away therefrom to consent -through an angular displacement of the rotor - the replacement of one pair of units with the subsequent one; said operating means moving in a reciprocating way along the axis of the rotor.

7. Assembly according to claim 6, characterized in that the eccentric-like means for operating the compression in the cylinder-piston systems which are the members able to create energy. are operated in synchronism with the rotor to act on said members every time a unit move away from the active position.

8. Assembly according to claim 1, characterized in that it also comprises retention means for retaining said centrifugal mass during an acceleration phase of said platform, which retention means are driven for the release of said centrifugal mass in correspondence of a predetermined angular orientation - relative to the advancement direction - and in correspondence of a predetermined angular velocity of rotation reached by the platform and detected by suitable tachymetric devices, said centrifugal mass striking - owing to the release thereof - a portion of said housing and yielding up a corresponding share of the energy thereto and hence causing the advancement thereof, a return cam being fixedly provided in respect to the housing to bring said centrifugal mass back towards the centre of said unit, while the platform is decelerated.

9. Assembly according to claim 8. characterized in that said retention means comprise in combination a pair of stems each driven by a pinion-rack system, said pinion being operated by a cylinder-piston device whose intervention is controlled by said tachymetric devices.

10. Assembly according to claims 8 and 9, characterized in that said motor is an electric self- braking motor.

11. Assembly according to claim 8, characterized in that said motor is an internal combustion engine, braking means being provided for decelerating said platform.

12. Assembly according to claims 8 to 11, characterized in that a number of units with platform and centrifugal mass are disposed around a common rotating support so as to be successively brought in front of said housing portion intended to receive the impact of the centrifugal masses of each unit.

13. Assembly according to claim 12, characterized in that a main motor operates, through independent transmissions, the movement of said common rotating support and the rotation of the individual platforms of the individual units, friction wheels with mobile axis allowing the engagement of the platform with the transmission for the acceleration phases and the disengagement of the platform for the deceleration phases, respectively.

14. Assembly according to claims 8 to 13, characterized in that said friction wheels with mobile axis are carried by oscillating arms, a homokinetic joint allowing the oscillation of the transmission.

0227613

Fig.1

Fig.2

Fig.3

134  130  120  101  118  132  134  103  $F_{10}$  V

022'7613

Fig. 4

Fig. 5

0227613

Fig. 6

Fig. 7

Fig. 8

Fig. 9

Fig. 10

Fig. 11

Fig.12

0227613